# EUROPÄISCHE PATENTSCHRIFT

(11) **EP 2 193 300 B1**
(45) Veröffentlichungstag und Bekanntmachung des Hinweises auf die Patenterteilung: **02.03.2011**
(21) Anmeldenummer: 08803625.6
(22) Anmeldetag: 04.09.2008
(51) Int. Cl.: F16L 11/08, F16L 11/15, F16L 25/00, F16L 33/01, F16L 33/207

(54) **WELLROHRSCHLAUCHLEITUNG**
CORRUGATED HOSE PIPE
TUYAU ONDULE FLEXIBLE

(30) Priorität: 04.10.2007 DE 102007047495
(43) Veröffentlichungstag der Anmeldung: 09.06.2010
(73) Patentinhaber: ContiTech Kühner GmbH & Cie. KG, 71570 Oppenweiler (DE)
(72) Erfinder: WILDERMUTH, Andreas, 71672 Marbach (DE); STEINBECK, Josef, 71522 Backnang (DE)
(74) Vertreter: Finger, Karsten
(86) Internationale Anmeldenummer: PCT/EP2008/061655
(87) Internationale Veröffentlichungsnummer: WO 2009/043672

(56) Entgegenhaltungen:
- DE-A1- 10 351 102
- DE-C1- 19 921 724
- US-A1- 2007 079 885

## Beschreibung

Die Erfindung betrifft flexible Wellrohrschlauchleitungen, die zur Weiterleitung von - insbesondere unter Hochdruck stehenden - flüssigen oder gasförmigen Medien geeignet sind. Solche Schlauchleitungen sind beispielsweise aus der DE 199 21 724 C1 bekannt. Sie weisen als Innenseele ein - vorzugsweise metallisches - Wellrohr auf, dessen beide Enden mit geeigneten Anschlussarmaturen druckdicht verbunden sind und das von einem elastomeren Druckträgerschlauch umfasst ist. In großem Umfang werden sie im Kraftfahrzeugbau eingesetzt, wo sie auch unter extremen Betriebsbedingungen über lange Zeiträume - d.h. möglichst während der gesamten Lebensdauer der angeschlossenen Aggregate - hohen Wechselbelastungen bzgl. Druck und Temperatur standhalten müssen. Dabei ist ihre Funktionszuverlässigkeit für die Verkehrssicherheit der damit ausgerüsteten Fahrzeuge von entscheidender Bedeutung.

Bei bisher bekannten Wellrohrschlauchleitungen bestand ein konstruktives und verfahrenstechnisches Problem darin, sie serienmäßig so zusammenzubauen, dass alle Abmessungen und die konstruktiv vorgesehene optimale Positionierung ihrer Bauteile zueinander exakt reproduzierbar waren und dass die Bauteile nicht bereits beim Zusammenbau beschädigt wurden. Auch musste vermieden werden, dass durch einen fehlerhaften Zusammenbau das spätere Auftreten von Defekten begünstigt wurde. Beispielsweise konnte das die Innenseite der Leitungswandung bildende Wellrohr bei der Montage durch übermäßige Stauchung oder Reckung so beschädigt werden, dass sofort oder aber erst im späteren praktischen Betrieb Risse oder Brüche die Folge waren. Ferner konnten durch Überschreitungen der Schnittlängentoleranzen sowohl des Wellrohres als auch des Druckträgerschlauches in der Rohr- bzw. Schlauchwandung Materialspannungen auftreten, die auf die Dauer zu Defekten führten.

Der Erfindung liegt die Aufgabe zugrunde, eine konstruktiv verbesserte Wellrohrschlauchleitung und ein optimiertes Verfahren zu deren Herstellung aufzuzeigen. Dabei sollte gewährleistet werden, dass die Leitungsbestandteile - also das Wellrohr, der Druckträgerschlauch und die Anschlussarmaturen - beim Zusammenbau reproduzierbar zueinander positioniert und fixiert werden und dass Längenabweichungen des Wellrohres und des Druckträgerschlauches beim Zusammenbau so ausgeglichen werden, dass sie sich im praktischen Betrieb des Endproduktes nicht negativ auswirken. Zusätzlich bestand die Forderung, Möglichkeiten zur Reduzierung der Herstellungskosten der Schlauchleitung aufzuzeigen.

Die vorliegende Erfindung geht von einer Wellrohrschlauchleitung der aus dem eingangs zitierten Dokument DE 199 21 724 C1 bekannten Art aus, also von einer Wellrohrschlauchleitung, die - wie im Oberbegriff des Patentanspruchs 1 angegeben - ein Wellrohr aufweist, das mit einem elastomeren Druckträgerschlauch umhüllt und an seinen axialen Enden druckdicht mit Anschlussarmaturen verbunden ist, wobei die Enden des Druckträgerschlauches durch die Anschlussarmaturen gefasst und fixiert sind.

Zur Lösung der Aufgabe wird eine gattungsgemäße Wellrohrschlauchleitung vorgeschlagen, die die im kennzeichnenden Teil des Patentanspruchs 1 genannten und in der Zeichnung wiedergegebenen Merkmale aufweist. In den Unteransprüchen sind zweckmäßige Ausgestaltungen und Weiterbildungen der Erfindung sowie vorteilhafte Verfahren zur Herstellung der erfindungsgemäßen Wellrohrschlauchleitung angegeben.

Im Folgenden wird die Erfindung unter Bezugnahme auf in der beigefügten Zeichnung schematisch dargestellte Ausführungsbeispiele beschrieben. In der Zeichnung zeigen
**Fig. 1** als Teil des Erfindungsgegenstandes ein Wellrohr, das an seinen Enden je einen fest mit ihm verbundenen Rohrstutzen aufweist,
**Fig.2** dasselbe Wellrohr mit den angeschlossenen Rohrstutzen, ergänzt durch einen das Wellrohr umhüllenden Druckträgerschlauch und je einen in dessen Enden eingeschobenen Schlauchnippel sowie je eine die Enden des Druckträgerschlauches umfassende zylindrische Hülse und
**Fig.3** eine vollständige erfindungsgemäße Wellrohrschlauchleitung, die sich von dem in Fig.2 dargestellten Zwischenprodukt dadurch unterscheidet, dass die beiden ursprünglich zylindrischen Hülsen konzentrisch radial verformt sind.
**Fig.4** zeigt eine im Rahmen der vorliegenden Erfindung besonders vorteilhafte zweiteilige Variante eines Schlauchnippels.

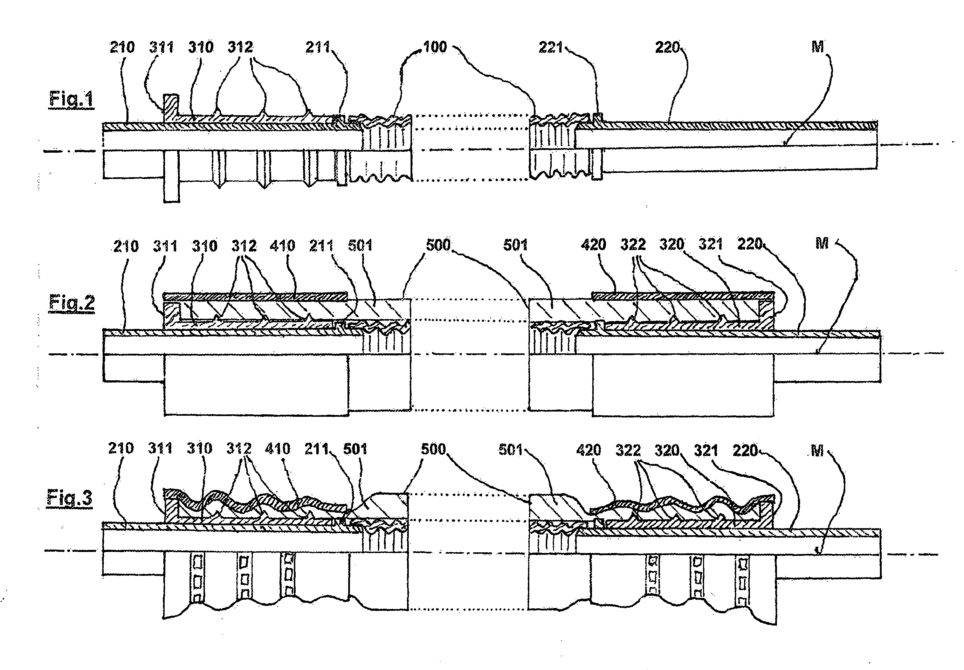

Wie **Fig.1** zeigt, weist eine erfindungsgemäße Wellrohrschlauchleitung in an sich bekannter Weise ein - insbesondere metallisches - Wellrohr **100** auf, dessen Enden fest und druckdicht mit je einem Rohrstutzen **210** und **220** verbunden sind. Die Verbindungen können beispielsweise durch Lötung, Schweißung oder Klebung erzeugt sein. Erfindungsgemäß weisen die Rohrstutzen **210** und **220** in geringem axialem Abstand von ihren Verbindungen mit dem Wellrohr **100** kragenartige radiale Vorsprünge auf, die als Nippelanschläge **211** und **221** fungieren, indem sie exakt festlegen, wie weit die von den freien Enden der Rohrstutzen **210** und **220** formschlüssig auf diese aufschiebbaren Schlauchnippel **310** und **320** - siehe **Fig.2** - an die Enden des Wellrohrs **100** herangeschoben werden können und aufgeschoben werden sollen.

Erfindungsgemäß weisen die Schlauchnippel **310** und **320** an ihren den Nippelanschlägen **211** und **221** abgewandten Enden je einen radial abstehenden Kragen auf, der als Schlauchanschlag **311** bzw. **321** exakt festlegt, wie weit der das Wellrohr **100** umfassende Druckträgerschlauch **500** auf den betreffenden Schlauchnippel aufgeschoben werden kann und aufgeschoben werden soll.

Somit schafft die vorliegende Erfindung durch die Nippelanschläge **211** und **221,** die die exakte Positionierung der Schlauchnippel auf den Rohrstutzen bewirken, sowie durch die Schlauchanschläge **311** und **321,** die die exakte Positionierung der Enden des Druckträgerschlauches **500** bewirken, die konstruktiven Voraussetzungen dafür, dass für den Druckträgerschlauch **500** ein genaues axiales Längenmaß - nämlich der axiale Abstand der Schlauchanschläge **311** und **321 -** als Einbaumaß vorgegeben und somit die Schnittlänge des Druckträgerschlauches **500** in Abstimmung mit der Länge des Wellrohres optimiert werden kann, wodurch die Wellrohrschlauchleitung insgesamt bezüglich Verschleiß und bestimmungsgemäßer Funktion optimiert wird.

Der Druckträgerschlauch **500** enthält als Druckträger vorzugsweise ein in seine Wandung **501** eingebettetes Stahldraht-Geflecht. Als Flechtwinkel werden im Rahmen der vorliegenden Erfindung Winkel von 30° bis 40° bevorzugt.

Vorzugsweise ist an erfindungsgemäßen Wellrohrschlauchleitungen im fertigen Zustand der axiale Abstand zwischen den Schlauchanschlägen **311** und **321** geringer als die Schnittlänge des Druckträgerschlauches, d.h. der Druckträgerschlauch wird bei der Montage entsprechend axial gestaucht. Dabei hat sich eine Stauchung um 5 bis 10 Prozent der Schnittlänge des Druckträgerschlauches als optimal erwiesen. Durch die Stauchung ist insbesondere sichergestellt, dass der Druckträgerschlauch ohne axiales Spiel eingesetzt und so exakt positioniert fixiert ist.

Bei den erfindungsgemäßen Wellrohrschlauchleitungen hat es sich im Hinblick auf die Stauchung des Druckträgerschlauches als besonders zweckmäßig erwiesen, an die Schlauchnippel **310** und **320** an sich bekannte, radial nach außen vorstehende, axial versetzt umlaufende Klemmrippen **312** und **322** anzuformen, um die mittels der Presshülsen **410** und **420** gegen sie gepressten Endbereiche des Druckträgerschlauches **500** dauerhaft sicher axial zu fixieren.

Die Presshülsen **410** und **420** sind vorzugsweise aus einfachen, glattwandig zylindrischen Abschnitten **411** und **421** eines gezogenen Metallrohres gebildet und können daher sehr kostengünstig bereitgestellt werden. Durch Kaltverformung sind sie radial so verengt, dass sie die von ihnen umfassten Endbereiche der elastomeren Schlauchwandung **501** mitsamt dem in diese eingebetteten Druckträger konzentrisch gegen die Schlauchnippel **310** bzw. **320** und insbesondere gegen deren umlaufende Klemmrippen **312** bzw. **322** pressen, wodurch sie die Schlauchenden unverrückbar fixieren.

Die axiale Erstreckung der Presshülsen **410** und **420** reicht zweckmäßig von den Schlauchnippeln **310** und **320** bis über die Nippelanschläge **211** bzw. **221** und die Enden des Wellrohres **100.** Dabei weisen die Presshülsen **410** und **420 -** versetzt zu den umlaufenden Klemmrippen **312** und **322** der Schlauchnippel **310** bzw. **320 -** Einschnürungen auf, die bei ihrer konzentrischen Verpressung erzeugt sind und die den auf die eingeklemmte Schlauchwandung **501** einwirkenden Anpressdruck so verstärken, dass die Enden des Druckträgerschlauches **500** sicher fixiert sind.

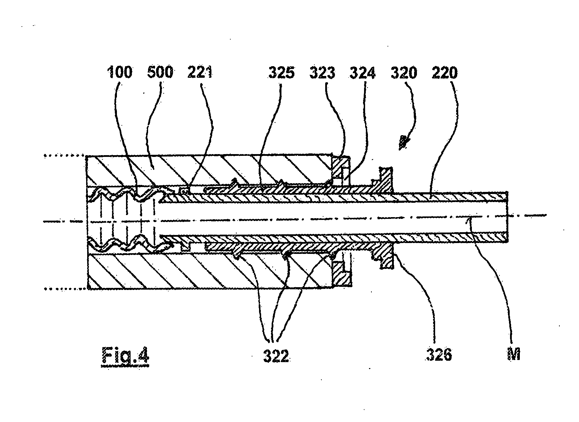

In einer sowohl konstruktiv als auch verfahrenstechnisch besonders vorteilhaften Ausführungsform des Erfindungsgegenstandes ist zumindest einer der beiden verwendeten Schlauchnippel wenigstens zweiteilig ausgebildet, wie beispielsweise die in **Fig.4** schematisch dargestellte Variante zeigt. Als Schlauchanschlag wirkt hier eine Lochscheibe **323** deren Außen-Durchmesser etwa dem Durchmesser des Druckträgerschlauches **500** entspricht und durch deren zentrales Loch **324** der Nippelkörper **325** bis zu einem an ihn angeformten Endanschlag **326** hindurchgeschoben und dabei in den Druckträgerschlauch 500 eingeführt werden kann. Die Soll-Position ist erreicht, wenn der Nippelkörper **325** einerseits am Nippelanschlag **221** anstößt und andererseits der Endanschlag **326** sich formschlüssig in das Loch **324** einfügt.

Durch die erfindungsgemäße konstruktive Gestaltung der Anschlussarmaturen der vorgeschlagenen Wellrohrschlauchleitung ermöglicht die vorliegende Erfindung, dass als Werkstoff für wesentliche Teile dieser Armaturen, insbesondere für die Schlauchnippel **310** und **320** sowie für die Presshülsen **410** und **420,** anstelle des bisher verwendeten Edelstahls auf Aluminium oder eine Aluminiumlegierung zurückgegriffen werden kann. Hierdurch können erhebliche Kosteneinsparungen erzielt werden.

Zur Herstellung der erfindungsgemäßen Wellrohrschlauchleitungen wird vorzugsweise ein Verfahren gemäß einem der Patentansprüche 8 bis 14 angewandt.

Dabei ergeben sich durch die erfindungsgemäße Stauchung des Druckträgerschlauches folgende vorteilhafte Effekte: Der Druckträgerschlauch wird beim Stauchen zwangsläufig geweitet, und dadurch erhält das Wellrohr im Innern des Druckträgerschlauches Gelegenheit, sich axial so zu verschieben, dass die auf die gewellte Rohrwandung einwirkenden Axialkräfte sich über die gesamte Rohrlänge verteilen und vergleichmäßigen. Hierdurch wird insbesondere dem Auftreten von örtlich überhöhten Axialkräften vorgebeugt, durch die Wandungsbrüche verursacht werden können. Auch werden hierdurch Überschreitungen der Schnittlängentoleranzen des Wellrohres und des Druckträgerschlauches weitgehend kompensiert, da sie immer auf die gesamte Wellrohrlänge verteilt werden nicht zu axial eng begrenzten Stauchungen oder Reckungen des Wellrohres mit daraus resultierenden Brüchen der Wellrohrwandung führen.

### Bezugszeichenliste

### (Teil der Beschreibung)

- **100**: **Wellrohr**
- **210**: Rohrstutzen/li (d.h. in der Zeichnung links)
- **211**: Nippelanschlag/li
- **220**: Rohrstutzen/re (d.h. in der Zeichnung rechts)
- **221**: Nippelanschlag/re
- **310**: Schlauchnippel/li
- **311**: Schlauchanschlag/li
- **312**: umlaufende Klemmrippen/li
- **320**: Schlauchnippel/re
- **321**: Schlauchanschlag/re
- **322**: umlaufende Klemmrippen/re
- **323**: Lochscheibe
- **324**: Loch der Lochscheibe
- **325**: Schlauchnippelkörper
- **326**: Endanschlag
- **410**: Presshülse(li)
- **420**: Presshülse(re)
- **500**: Druckträgerschlauch
- **501**: elastomere Schlauchwandung mit eingebettetem Druckträger
- **M**: Mittelachse (Längsachse)

## Patentansprüche

1. Wellrohrschlauchleitung mit einem Wellrohr (100), das mit einem elastomeren Druckträgerschlauch (500) umhüllt an seinen axialen Enden druckdicht mit Anschlussarmaturen verbunden ist, wobei die Enden des Druckträgerschlauches durch die Anschlussarmaturen gefasst und fixiert sind, wobei die Anschlussarmaturen je einen Rohrstutzen **(210, 220)** aufweisen der einerseits ein freies Ende besitzt und andererseits fest und druckdicht mit einem der Enden des Wellrohres **(100)** verbunden ist,
**dadurch gekennzeichnet,**
• **dass** die Rohrstutzen **(210, 220)** an ihren wellrohrseitigen axialen Enden je einen umlaufenden, radial vorragenden festen Nippclanschlag **(211, 221)** aufweisen,
• und **dass** auf den Rohrstutzen **(210, 220)** je ein Schlauchnippel **(310, 320)** formschlüssig gelagert ist, der vom freien Ende des Rohrstutzens her bis an den jeweiligen Nippelanschlag **(211)** bzw. **(221)** herangeschoben und **dadurch** axial positioniert ist,
• wobei die Schlauchnippel **(310, 320)** an ihren den freien Enden der Rohrstutzen **(210, 220)** zugewandten Enden je einen radial abstehenden, umlaufenden Schlauchanschlag **(311, 321)** aufweisen, dessen Durchmesser annähernd dem Außcndurchmesser des Druckträgcrschlauches **(500)** entspricht und an dem die ihm zugewandte Stirnfläche des Druckträgerschlauches **(500)** anliegt
• und **dass** an sich bekannte Presshülsen **(410, 420)** vorgesehen sind, die den Druckträgerschlauch **(500)** an seinen axialen Endbereichen, in die die beiden Schlauchnippel **(310, 320)** hineinragen, umfassen, konzentrisch auf die Schlauchnippel **(310, 320)** pressen und auf diesen fixieren.

2. Wellrohrschlauchleitung nach Patentanspruch 1, **dadurch gekennzeichnet, dass** der in die elastomere Wandung **(501)** des Druckträgerschlauches **(500)** eingebettete Druckträger ein Stahldraht-Geflecht ist.

3. Wellrohrschlauchleitung nach Patentanspruch 2, **dadurch gekennzeichnet, dass** der Flechtwinkel des Stahldraht-Geflechts 30° bis 40° Grad beträgt.

4. Wellrohrschlauchleitung nach einem der Patentansprüche 1 bis 3, **dadurch gekennzeichnet, dass** der axiale Abstand zwischen den Schlauchanschlägen **(311** und **321)** geringer als die Schnittlänge des Druckträgerschlauches **(500)** ist und dass der Druckträgerschlauch **(500)** entsprechend axial gestaucht ist.

5. Wellrohrschlauchleitung nach einem der Patentansprüche 1 bis 4, **dadurch gekennzeichnet, dass** der Druckträgerschlauch **(500)** zwischen den Schlauchanschlägen **(311** und **321)** um 5 bis 10% seiner Schnittlänge axial gestaucht ist.

6. Wellrohrschlauchleitung nach einem der Patentansprüche 1 bis 5, **dadurch gekennzeichnet, dass** die Schlauchnippel **(310** und **320)** axial versetzte, radial nach außen vorstehende, umlaufende Klemmrippen **(312)** bzw. **(322)** aufweisen.

7. Wellrohrschlauchleitung nach einem der Patentansprüche 1 bis 6, **dadurch gekennzeichnet, dass** zumindest einer der beiden Schlauchnippel **(310** und/oder **320)** aus wenigstens zwei Teilen zusammengesetzt ist derart, dass der Schlauchanschlag des betreffenden Schlauchnippels als Lochscheibe **(323)** ausgebildet ist, durch deren Loch **(324)** der Schlauchnippelkörper **(325)** bis zu einem an ihn angeformten Endanschlag **(326)** hindurchgeschoben und der Endanschlag **(326)** formschlüssig in das Loch **(324)** der Lochscheibe **(323)** eingefügt ist.

8. Wellrohrschlauchleitung nach einem der Patentansprüche 1 bis 7, **dadurch gekennzeichnet, dass** die Presshülsen **(410** und **420)** aus Abschnitten eines gezogenen Metallrohres bestehen, die durch Kaltverformung konzentrisch zusammengedrückt sind und die Wandung des Druckträgerschlauches **(500)** radial gegen die Schlauchnippel **(310** und **320)** pressen.

9. Wellrohrschlauchleitung nach einem der Patentansprüche 1 bis 8, **dadurch gekennzeichnet, dass** die Anschlussarmaturen zumindest teilweise aus Aluminium oder einer Aluminiumlegierung gebildet sind.

10. Verfahren zur Herstellung einer gemäß einem der Patentansprüche 1 bis 9 ausgebildeten Wellrohrschlauchleitung, **dadurch gekennzeichnet,**
• **dass** die Enden eines bestimmungsgemäß abgelängten Wellrohres fest und druckdicht mit je einem Rohrstutzen verbunden werden, wobei diese Rohrstutzen an ihren wellrohrseitigen Enden je einen umlaufenden, radial nach außen ragenden festen Nippelanschlag aufweisen,
• **dass** das eine Ende eines bestimmungsgemäß abgelängten Druckträgerschlauches so auf einen passenden Schlauchnippel aufgeschoben wird, dass die Stirnfläche des Schlauchendes an einen am Ende des Schlauchnippels kragenartig abstehenden Schlauchanschlag anstößt,
• **dass** der Druckträgerschlauch dann durch axiale Stauchung geweitet und - mit seinem freien Ende voran - über einen der Rohrstutzen auf das Wellrohr geschoben wird, bis der an seinem rückwärtigen Ende in ihn eingesetzte Schlauchnippel mit seiner inneren Stirnfläche gegen den Nippelanschlag des diesseitigen Rohrstutzens stößt,
• **dass** dann auf den noch freien Rohrstutzen von seinem freien Ende her ein entsprechender Schlauchnippel aufgesteckt und vollständig - d.h. mit dem an seinem rückwärtigen Ende kragenartig abstehenden Schlauchanschlag an die ihm zugewandte Stirnfläche des Druckträgerschlauches anstoßend - in den Druckträgerschlauch eingeführt und gleichzeitig bis an den Nippelanschlag dieses Rohrstutzens herangeschoben wird,
• und **dass** schließlich über die beiden Enden des Druckträgerschlauches Presshülsen-Rohlinge geschoben werden, die die Enden des Druckträgerschlauches so weit umfassen, wie sich in diesen die Schlauchnippel erstrecken,
• und **dass** die Presshülsen-Rohlinge dann durch konzentrische, die von ihnen umfassten Wandungsbereiche des Druckträgerschlauches auf den Schlauchnippeln axial fixierende Verpressung bleibend verformt werden.

11. Verfahren nach Patentanspruch 10, **dadurch gekennzeichnet, dass** der Druckträgerschlauch beim Einführen des zweiten Schlauchnippels axial gestaucht und **dadurch** radial geweitet wird.

12. Verfahren nach einem der Patentansprüche 10 oder 11, **dadurch gekennzeichnet, dass** die Schnittlängentoleranz des Druckträgerschlauches und die Längentoleranz des Wellrohres bei der Montage **dadurch** ausgeglichen werden, dass das Wellrohr um die Differenz zwischen der (tatsächlichen) Schnittlänge des Druckträgerschlauches und der Länge des Wellrohres axial gestaucht wird.

13. Verfahren nach einem der Patentansprüche 10 bis 12, **dadurch gekennzeichnet, dass** während des axialen Stauchens ein Knicken des Druckträgerschlauches und/oder des Wellrohres durch Anlegen zur Mittelachse **M** paralleler, insbesondere halbzylindrischer, steifer Formschalen verhindert wird.

14. Verfahren nach einem der Patentansprüche 10 bis 13, **dadurch gekennzeichnet, dass** als Presshülsen-Rohlinge glattwandige, zylindrische Abschnitte eines gezogenen Metallrohres verwendet werden.

## Claims

1. Corrugated hose pipe including a corrugated pipe (100) that is enveloped by an elastomer pressure-absorbing hose (500) and is connected to connectors in a pressure-tight manner at its axial ends, wherein the ends of the pressure-absorbing hose are held and secured by the connectors, wherein the connectors each have a pipe connection (210, 220), which has a free end at one end and is connected fixedly and in a pressure-tight manner to one of the ends of the corrugated pipe (100) at the other end, **characterized**
• **in that** the pipe connections (210, 220) each have at their corrugated-pipe-side axial ends a circumferential, fixed nipple stop (211, 221) that protrudes in a radial manner,
• and **in that** a hose nipple (310, 320) is mounted in a positive locking manner on each pipe connection (210, 220), said hose nipple being moved from the free end of the pipe connection as far as the respective nipple stop (211) or (221) and thereby being axially positioned,
• wherein the hose nipples (310, 320), at their ends facing the free ends of the pipe connections (210, 220), each have a radially protruding, circumferential hose stop (311, 321), the diameter of which corresponds approximately to the external diameter of the pressure-absorbing hose (500) and against which the end face of the pressure-absorbing hose (500) facing it abuts
• and **in that** there are provided crimp sleeves (410, 420) known per se which surround the pressure-absorbing hose (500) at its axial end regions, into which the two hose nipples (310, 320) protrude, press it concentrically onto the hose nipples (310, 320) and secure it on said hose nipples.

2. Corrugated hose pipe according to Claim 1, **characterized in that** the pressure-absorbing means embedded into the elastomer wall (501) of the pressure-absorbing hose (500) is steel wire braiding.

3. Corrugated hose pipe according to Claim 2, **characterized in that** the braid angle of the steel wire braiding is 30° to 40°.

4. Corrugated hose pipe according to one of Claims 1 to 3, **characterized in that** the axial distance between the hose stops (311 and 321) is smaller than the cut length of the pressure-absorbing hose (500) and **in that** the pressure-absorbing hose (500) is correspondingly axially compressed.

5. Corrugated hose pipe according to one of Claims 1 to 4, **characterized in that** the pressure-absorbing hose (500) is axially compressed by 5 to 10% of its cut length between the hose stops (311 and 321).

6. Corrugated hose pipe according to one of Claims 1 to 5, **characterized in that** the hose nipples (310 and 320) have axially offset, circumferential clamping ribs (312) or (322) that protrude radially outwards.

7. Corrugated hose pipe according to one of Claims 1 to 6, **characterized in that** at least one of the two hose nipples (310 and/or 320) is assembled from at least two parts in such a manner that the hose stop of the relevant hose nipple is realized as a perforated disk (323), the hose nipple body (325) being pushed through the hole (324) in said perforated disk as far as up to an end stop (326) that is integrally molded thereon and the end stop (326) being inserted in a positive locking manner into the hole (324) in the perforated disk (323).

8. Corrugated hose pipe according to one of Claims 1 to 7, **characterized in that** the crimp sleeves (410 and 420) consist of sections of a drawn metal pipe which are pressed together in a concentric manner by means of cold forming and press the wall of the pressure-absorbing hose (500) radially against the hose nipples (310 and 320).

9. Corrugated hose pipe according to one of Claims 1 to 8, **characterized in that** the connectors are formed at least partially from aluminum or an aluminum alloy.

10. Method for producing a corrugated hose pipe realized according to one of Claims 1 to 9, **characterized**
• **in that** the ends of a corrugated pipe cut to length as intended are each connected fixedly and in a pressure-tight manner to a pipe connection, wherein said pipe connections each have on their corrugated-pipe-side ends a circumferential, fixed nipple stop that protrudes radially outwards,
• **in that** the one end of a pressure-absorbing hose cut to length as intended is slid onto a suitable hose nipple such that the end face of the hose end abuts against a hose stop protruding in the manner of a collar at the end of the hose nipple,
• **in that** the pressure-absorbing hose is then widened by means of axial compression and - with its free end to the fore - is slid onto the corrugated pipe over one of the pipe connections until the hose nipple inserted therein at its rearward end abuts with its inner end face against the nipple stop of the pipe connection on this side,
• **in that** a corresponding hose nipple is then slid from its free end onto the pipe connection that is still free and is inserted completely - i.e. with the hose stop protruding in the manner of a collar at its rearward end abutting against the end face of the pressure-absorbing hose facing it - into the pressure-absorbing hose and at the same time is slid as far as the nipple stop of said pipe connection,
• and **in that** finally crimp sleeve blanks are slid over the two ends of the pressure-absorbing hose, said crimp sleeve blanks surrounding the ends of the pressure-absorbing hose as far as the hose nipples extend in the same,
• and **in that** the crimp sleeve blanks are then permanently deformed by means of concentric pressing which secures the wall regions of the pressure-absorbing hose surrounded by said crimp sleeve blanks onto the hose nipples in an axial manner.

11. Method according to Claim 10, **characterized in that** the pressure-absorbing hose is axially compressed when the second hose nipple is inserted and is thereby radially widened.

12. Method according to one of Claims 10 or 11, **characterized in that** the cut length tolerance of the pressure-absorbing hose and the length tolerance of the corrugated pipe are adjusted during assembly **in that** the corrugated pipe is axially compressed by the difference between the (actual) cut length of the pressure-absorbing hose and the length of the corrugated pipe.

13. Method according to one of Claims 10 to 12, **characterized in that** during the axial compressing, a kink in the pressure-absorbing hose and/or in the corrugated pipe is prevented by placing in particular semi-circular, rigid shell molds parallel to the center axis M.

14. Method according to one of Claims 10 to 13, **characterized in that** smooth-walled, cylindrical sections of a drawn metal pipe are used as crimp sleeve blanks.

## Revendications

1. Conduit tubulaire flexible ondulé doté d'un tube ondulé (100) enveloppé dans un tuyau flexible (500) en élastomère résistant à la pression et dont les extrémités axiales sont reliées de manière étanche en pression à des raccords, les extrémités du tuyau flexible résistant à la pression étant serties et fixées par les raccords,
les raccords présentant chacun une tubulure (210, 220) qui d'un côté présente une extrémité libre et de l'autre côté est reliée de manière solidaire et étanche à la pression à l'une des extrémités du tube ondulé (100),
**caractérisé en ce que**
les tubulures (210, 220) présentent à leur extrémité axiale un mamelon fixe (211, 221) de butée périphérique débordant radialement,
**en ce qu'**un mamelon fileté (310, 320) est monté en correspondance géométrique sur chacune des tubulures (210, 220), est glissé depuis l'extrémité libre de la tubulure jusqu'au mamelon de butée (211) ou (221) correspondant et est ainsi immobilisé axialement,
**en ce que** les mamelons (310, 320) de tuyau flexible présentant à leur extrémité tournée vers l'extrémité libre des tubulures (210, 220) une butée périphérique (311, 321) de tuyau flexible qui déborde radialement, dont le diamètre correspond sensiblement au diamètre extérieur du tuyau flexible (500) résistant à la pression et qui repose sur la surface frontale tournée vers ce dernier du tuyau flexible (500) résistant à la pression,
**en ce que** des douilles de compression (410, 420) intrinsèquement connues qui entourent les parties d'extrémité axiale du tuyau flexible (500) résistant à la pression et dans lesquelles les deux mamelons (310, 320) de tuyau flexible pénètrent compriment concentriquement les mamelons (310, 320) de tuyau flexible et se fixent sur ces derniers.

2. Conduit tubulaire flexible ondulé selon la revendication 1, **caractérisé en ce que** le support de pression incorporé dans la paroi (501) en élastomère du tuyau flexible (500) résistant à la pression est un treillis de fils d'acier.

3. Conduit tubulaire flexible ondulé selon la revendication 2, **caractérisé en ce que** l'angle de tressage du treillis en fils d'acier est compris entre 30 et 40 degrés.

4. Conduit tubulaire flexible ondulé selon l'une des revendications 1 à 3, **caractérisé en ce que** la distance axiale entre les butées (311 et 321) de tuyau flexible est inférieure à la longueur de découpe du tuyau flexible (500) résistant à la pression et **en ce que** le tuyau flexible (500) résistant à la pression est écrasé axialement en correspondance.

5. Conduit tubulaire flexible ondulé selon l'une des revendications 1 à 4, **caractérisé en ce que** le tuyau flexible (500) résistant à la pression est écrasé axialement sur 5 à 10 % de sa longueur de découpe entre les butées (311 et 321) de tuyau flexible.

6. Conduit tubulaire flexible ondulé selon l'une des revendications 1 à 5, **caractérisé en ce que** les mamelons (310 et 320) du tuyau flexible présentent des nervures périphériques de serrage (312) et (322) décalées axialement et débordant radialement vers l'extérieur.

7. Conduit tubulaire flexible ondulé selon l'une des revendications 1 à 6, **caractérisé en ce qu'**au moins l'un des deux mamelons (310 et/ou 320) de tuyau flexible est constitué de deux parties de telle sorte que la butée de tuyau flexible du mamelon du tuyau flexible concerné est configurée comme disque perforé (323), que le corps (325) du manchon de tuyau flexible est passé par son trou (324) jusqu'à une butée d'extrémité (326) qui y est formée et que la butée d'extrémité (326) est insérée en correspondance géométrique dans le trou (324) du disque perforé (323).

8. Conduit tubulaire flexible ondulé selon l'une des revendications 1 à 7, **caractérisé en ce que** les douilles de compression (410 et 420) sont constituées de morceaux d'un tube métallique étiré qui sont comprimés concentriquement par déformation à froid et qui compriment radialement la paroi du tuyau flexible (500) résistant à la pression contre les mamelons (310 et 320) de tuyau flexible.

9. Conduit tubulaire flexible ondulé selon l'une des revendications 1 à 8, **caractérisé en ce que** les raccords sont formés au moins en partie d'aluminium ou d'un alliage d'aluminium.

10. Procédé de fabrication d'un conduit flexible tubulaire ondulé configuré selon l'une des revendications 1 à 9,
**caractérisé en ce que**
les extrémités d'un tube ondulé découpé à longueur appropriée sont reliées solidairement et de manière étanche à la pression à une tubulure, ces tubulures présentant sur leur extrémité côté tube ondulé un mamelon périphérique de butée fixe débordant radialement vers l'extérieur,
**en ce qu'**une extrémité d'un tuyau flexible résistant à la pression est découpée à longueur appropriée est glissée sur un mamelon de tuyau flexible adapté de telle sorte que la surface frontale de l'extrémité du tuyau flexible vienne buter contre une butée de tuyau flexible qui déborde en collet à l'extrémité du mamelon pour tuyau flexible,
**en ce que** le tuyau flexible résistant à la pression est évasé par écrasement axial et est glissé avec son extrémité libre vers l'avant sur le tube ondulé au-dessus d'une des tubulures jusqu'à ce que le mamelon pour tuyau flexible qui est inséré à son extrémité arrière vienne buter par sa surface frontale intérieure contre le mamelon de butée de la tubulure située de son côté,
**en ce qu'**ensuite un mamelon approprié de tuyau flexible est enfiché sur la tubulure encore libre par l'extrémité libre de cette dernière et est inséré complètement dans le tuyau flexible résistant à la pression, c'est-à-dire avec la butée pour tuyau flexible qui déborde en collet à son extrémité arrière en butée contre la surface frontale, tournée vers lui, du tuyau flexible résistant à la pression, et en même temps est glissé jusqu'au mamelon de butée de cette tubulure,
**en ce qu'**enfin des ébauches de manchon de compression qui entourent les extrémités du tuyau flexible résistant à la pression sur la distance sur laquelle ces dernières s'étendent dans les mamelons de tuyau flexible sont glissées au-dessus des deux extrémités du tuyau flexible résistant à la pression et
**en ce que** les ébauches de douille de compression sont alors déformées de manière permanente sur les mamelons de tuyau flexible par les parties de paroi, qu'elles entourent, du tuyau flexible résistant à la pression.

11. Procédé selon la revendication 10, **caractérisé en ce que** le tuyau flexible résistant à la pression est écrasé axialement et donc évasé radialement lors de l'insertion du deuxième mamelon de tuyau flexible.

12. Procédé selon l'une des revendications 10 et 11, **caractérisé en ce que** la tolérance sur la découpe à longueur du tuyau flexible résistant à la pression et la tolérance sur la longueur du tuyau ondulé sont compensées lors du montage en écrasant axialement le tuyau ondulé de la différence entre la longueur (effectivement) découpée du tuyau flexible résistant à la pression et la longueur du tuyau ondulé.

13. Procédé selon l'une des revendications 10 à 12, **caractérisé en ce que** pendant l'écrasement axial, le tuyau flexible résistant à la pression et/ou le tuyau ondulé sont empêchés de se couder en plaçant des coquilles moulées rigides, en particulier semi-cylindriques, parallèlement à l'axe central.

14. Procédé selon l'une des revendications 10 à 13, **caractérisé en ce qu'**il utilise comme ébauches de douille de compression des segments cylindriques à paroi lisse d'un tube métallique étiré.
